# EUROPEAN PATENT SPECIFICATION

(11) **EP 3 024 632 B1**
(45) Date of publication and mention of the grant of the patent: **01.04.2020**
(21) Application number: 14741848.7
(22) Date of filing: 16.07.2014
(51) Int. Cl.: B29C 49/24, B29C 49/04, B29C 49/08

(54) **IN-MOULD DECORATION OF AN ARTICLE AND REMOVING OF THE DECORATION**
IN-MOULD-DEKORATIONSVERFAHREN UND ENTFERNUNG DES DEKORS VON EINEM ARTIKEL
PROCÉDÉ DE DÉCORATION DANS LE MOULE ET D'ÉLIMINATION DE LA DÉCORATION DU ARTICLE DÉCORÉ

(30) Priority: 26.07.2013 CH 132013
(43) Date of publication of application: 01.06.2016
(73) Proprietor: Alpla-Werke Alwin Lehner GMBH & Co.KG, 6971 Hard (AT)
(72) Inventor: SIEGL, Robert, A-6850 Dornbirn (AT)
(74) Representative: Riederer Hasler & Partner Patentanwälte AG
(86) International application number: PCT/EP2014/065306
(87) International publication number: WO 2015/011003

(56) References cited:
- EP-A2- 0 190 009
- WO-A2-2013/110949
- DE-A1- 3 833 711
- JP-A- H01 176 541
- JP-A- H03 292 128
- JP-A- S63 252 718
- JP-A- 2000 000 879
- US-A- 5 232 653
- DATABASE WPI Week 198847 Thomson Scientific, London, GB; AN 1988-335237 -& JP S63 249615 A (CHIYODA GRAVURE PRE) 17 October 1988 (1988-10-17)

## Description

The present invention relates to a process for manufacturing a decorated extrusion blow moulded or a stretch blow moulded article, in particular a container.

There exist a number of techniques for applying a decoration like a decorative pattern and/or a written message to the surface of an extrusion blow moulded or a stretch blow moulded article. Such decorations can be used to cover a portion of an article or to cover the entire outer surface of an article. They may be adapted for making an article appealing to the eye and/or for providing information to the user thereof (e.g. ingredients of food products or health-related information).

Labels are a well known means for applying decorations to articles. Glued-on labels e.g. made of paper or plastic foil which appear above the surface of the article are a common sight. Also known are in-mould labelling processes that allow labels to be attached to the article already during the moulding process. This technique involves the use of paper or plastic labels which ultimately form an integral part of the moulded product.

DE 1805328 discloses a method of forming decorations on compression-moulded articles which comprises introducing a decoration into a mould and forming an object by contacting it with the decorative pattern, wherein the decoration is introduced into the mould wall by a reciprocating piston.

Printing of articles after they have been formed is also known. However, the use of fast-drying solvents like benzene, toluol, xylol or nitro compounds may lead to contamination of the product (e.g. food) filled into the article after decoration, in particular if a substantial part of the outer surface of the article is printed. Water-based ink requires too much energy or too much time for drying. Fast curing materials which are hardened by chemical processes or irradiation are not suitable for thermoplastic recycling processes.

JPS63252718A teaches a decoration process in which a transferring foil with a printing layer is inserted into a mould, and said printing layer is transferred onto a hollow moulded object in the process of moulding the object.

JPH03292128A discloses a process for attaching a label to a moulded article using a label sheet comprising a film having a printing and a heat bonding layer for adhering to the article.

WO2013110949A2 (postpublished) concerns an in-mould labelling process for the manufacture of a labelled article wherein a labelstock web is fed into a mould where an article is formed and adheres to the label.

DE3833711A1 discloses a process for permanently labelling rubber articles wherein the label is attached under pressure and at an elevated temperature.

EP0190009A2 teaches a process for applying a barrier layer to a polyester container. The container is formed by moulding and the barrier label is attached via an in-mould technique utilizing heat-activatable high barrier copolyester resin as the adhesive.

JPH01176541A concerns a process for obtaining a moulded plastic container having an embossed pattern by inserting a transfer film into a mould and performing blow moulding, wherein the transfer film comprises a base material and the embossed pattern preliminarily provided to the surface of said base material.

JP2000000879A discloses a process for obtaining reclaimed pellets of high purity from a bottle with a label and a method for reclaiming the label from which ink was removed.

JPS63252718 discloses a process in accordance with the preamble of claim 1.

An object of the present invention is to provide an alternative process of applying decorations to moulded articles which should be economic. A further object of the present invention is to facilitate the recycling of the decorated articles. The description that is to follow presents numerous additional advantages.

There is provided an in-mould decoration process in accordance with claim 1.

In the following, preferred embodiments of the invention are described. The features mentioned in respect of said embodiments are to be (individually) considered preferred features and they may be implemented individually or in any combination provided such features do not exclude each other.

Printing ink is a liquid or a paste that contains pigments or dyes and is used to colour a surface to produce an image, a text and/or a design. In an aspect of the invention, the dimension of the image, text and/or design as a whole called decoration attached to the carrier may be at least basically equal with the decoration adhered with the container. As the decoration is two-dimensional on the carrier, it may be necessary to distort the decoration on the carrier so that the decoration on a container which is formed into a three-dimensional shape, is accurate and undistorted. If the area of the container with which the decoration may be adhered, is flat in the meaning of two-dimensional then the decoration on the carrier may have the same dimension as if the decoration is adhered with said area. Furthermore, the decoration itself based on printing ink does not have any structural layer. Thus, it may not be possible to detach the decoration from the carrier e.g. with fingers or a comparable tool without destroying the decoration.

Preferably, the printing process makes use of the residual heat of the forming or completely formed article in the mould, i.e. the remaining part of the heat used in and necessary for moulding. For this purpose, the printing process may be thermal transfer printing or similar to thermal transfer printing. In conventional thermal transfer printing the heat is applied to the decoration from the side of and/or through the carrier to which the decoration is attached prior to printing. In contrast hereto, according to a further aspect of the invention the heat is applied to the decoration from the article to be decorated. The heat may be radiant heat and/or contact heat originated from the preform or parison in the cavity of the mould. Or in other words, when a heated preform or a heated parison is blown up to form the article during the blow moulding process, the outer side of the article's wall will be pressed against the inner side of the cavity of the mould such that the outer wall extends along the inner side of the cavity. The carrier with the decoration is arranged between the inner side of the cavity and the outer side of the article such that the decoration is facing the article and a backside of the carrier is facing the cavity. By virtue of the residual heat of the article and/or the force of the article's outer side being pressed against the cavity, the decoration may be irreversibly transmitted from the carrier to the article and may be adhered to the article.

It may be possible to selectively detach parts of the decoration (i.e. material the decoration is made of) from the carrier and adhere them to the article by an adapted design of the cavity of the mould in combination with passing the carrier with the decoration through the cavity. However, it is preferred that the entire decoration is detached from the carrier and/or is adhered to the article..

If in this document it is referred to an "article" or a "formed article" the wording shall (as far as is reasonable) preferably disclose both, a formed article and alternatively a forming article. The same applies to the use of the term "forming article". Preferably, the formation of the article includes an expansion and/or an inflation of the article or of a precursor of the article like a preform or parison.

Advantageously, the moulding process is a blow moulding process. More preferably, the moulding process is extrusion blow moulding or stretch blow moulding. Most preferably, the moulding process includes stretch blow moulding a preform. This may optionally be done in a 2-step process where the injection of the preform and the stretch blow moulding of the article are separated in time and/or in space.

According to another aspect the step of detaching the decoration adhered to the article from the carrier may be effected by removing the formed and decorated article from the mould or by the action of the moulding step.

The printing ink of the decoration may comprise or it may be made of one or more coloured substances, preferably one or more print colours, more preferably one or more kinds and/or layers of paint, ink, and/or lacquer. Colours may also include black and/or white. The decoration may be patterned for example in form, shape and/or colour such as a decoration applied to a label, sleeve, or foil before the label, sleeve, or foil is adhered to an article. The process of the invention thus preferably dispenses with the use of labels and/or sleeves and/or foils which carry the decoration and are attached to an article together with the decoration. Consequently, less raw material may be used and less material may be lost during the manufacture of the decorated article as the decoration is formed in one or more layers of printing ink as proposed by an embodiment of the invention.

Furthermore, the decoration may be effectively adhered to the article whilst still being attached to or at least touching the carrier.

The decoration (e.g. a print) may expand to account for the expansion of the article during the process.

The decoration may comprise several spaced apart coloured elements of the same colour or of different colours, for example letters, characters, or figures.

Two or more spaced apart coloured elements may not be connected by any part of the decoration and/or anything that is detached from the carrier and adheres to the article.

The decoration may comprise a coloured layer connecting and preferably filling the spaces between two or more spaced apart coloured elements, wherein the coloured layer is preferably closer to the article than the coloured elements, thereby forming as part of the decoration a background colour on the decorated article. The coloured layer is made of printing ink. The coloured layer may, in addition to connecting the spaced apart elements, cover the sides of two or more of the elements facing the article. The coloured elements and/or the coloured layer may be made of coloured substances as described above.

According to an aspect of the invention the decoration is applied to the carrier in the form of a coating. The decoration may also be printed, in particular reverse printed, onto the carrier. Irrespective of how the decoration is applied to the carrier, it is preferred that the decoration, while attached to the carrier, has the same form and/or size as (later) while adhering to the article and/or as part of the decorated article. For example, if the decoration comprises characters these characters may already be present and optionally recognizable as characters on the carrier.

The decoration may be provided, in particular laminated or coated, with an adhesion-promoting agent. Preferably, the adhesion-promoting agent is positioned between the decoration and the article and/or it covers the side of the decoration facing the article. During the process the adhesion-promoting agent is detached from the carrier and/or transferred to the article together with the decoration. The adhesion-promoting agent may be non-detachably connected to the decoration. The adhesion-promoting agent may be solely coated or laminated on the decoration such that areas adjacent to the decoration are without any such adhesion-promoting agent.

It is preferred that the decoration adheres directly or via an adhesion-promoting agent to the outer surface of the article.

The decoration or the adhesion-promoting agent may be activatable. It may be activated by any activating means such as moisture, pressure, chemical or heat, for example. Preferably, it is heat-activatable and/or pressure-activatable.

The activation means, in particular heat and/or pressure, may cause the adhesion or an increased adhesion of the decoration and/or of the adhesion-promoting agent to the article (as compared to their non-activated form). For example, they may become tacky upon activation. It is preferred that neither the decoration nor, if present, the adhesion-promoting agent are (on the side facing the article) adhesive at 25°C while the decoration is still attached to the carrier.

According to an embodiment the decoration adheres to the article by heat bonding or hot bonding.

The heat and pressure described herein are preferably the heat and pressure of the formed or forming article against the decoration during the process. The heat and/or pressure may cause the decoration to effectively adhere to the article during the in-mould decoration process. The temperature of the formed or forming article is preferably such that it activates the decoration or the adhesion promoting agent without decomposing the decoration.

The adhesion-promoting agent may be in the form of a layer or coating that covers (partially or entirely) a surface of the decoration, in particular the surface facing the article. The adhesion-promoting agent may be a glue, or an adhesive varnish, or a thermolacquer which is optionally a reversible thermolacquer and is optionally adapted to weld with the article at temperatures above 50°C, 60°C, or 65°C. In a preferred embodiment of the invention, the adhesion-promoting agent is activatable only once during the life of the decoration.

More generally, the article may be at such a temperature that when it contacts the decoration during the moulding process, it activates the heat activatable decoration or - if present - the heat activatable adhesion promoting agent without substantially decomposing or damaging the decoration.

The temperature necessary and/or used for activating the adhesion promoting agent or decoration is preferably more than 40°C, 50°C, or 55°C and/or less than 100°C or 80°C or 65°C, in particular for polyester bottle applications. In one test, the article had a temperature between 65°C and 75°C as it contacted the decoration attached on the carrier. The physical bond between the decoration and the article is preferably such that the decoration does not peel off or detach from the in-mould decorated article at temperatures of up to about 55°C, for example, during truck transport.

The activatable adhesion-promoting agent and/or decoration may be activated prior to the decoration being fed into the mould; preferably, whilst the decoration is in the mould; more preferably, during the moulding process; and most preferably, when the article contacts the decoration during the moulding process.

The heat-activatable decoration or adhesion-promoting agent may comprise a polyolefin such as polypropylene (PP), polyethylene (PE) or polybutylene; a polystyrene; a polyamide; a polyvinyl acetate; a polycarbonate; a polyacrylate; a polyester; a polyurethane; a fluoropolymer; an ethylene-vinyl acetate (EVA) co-polymer; a starch such as PLA; or co-polymers, terpolymers or combinations thereof. Preferably, the heat activatable adhesion promoting agent comprises an ethylene-vinyl acetate (EVA) co-polymer. The heat activatable adhesion-promoting agent may comprise an EVA co-polymer.

The decoration may be provided, in particular laminated or coated, with a protective layer, wherein the protective layer is positioned between the decoration and the carrier and is preferably in contact with a separating layer attached to the carrier if present. The protective layer is detached from the carrier and/or transferred to the article together with the decoration. Preferably, the protective layer is harder than the decoration and/or protects the decoration from being removed from the article, e.g. scratched off.

Preferably, anything else that is detached from the carrier and/or adheres to the article together with the decoration (like the optional protective layer or the adhesion-promoting agent) is translucent or transparent. At least it may be more translucent or more transparent than the decoration.

Detaching the adhered decoration from the carrier may be effected without the aid of a cutting tool. It may for example be effected by the described adhesion to the article.

Preferably, the decoration comprises a first face that faces the carrier and a second face being opposite the first face and facing the article. The first face is (directly or via the protective layer) attached to the carrier until detaching from the carrier during the process. The second face adheres or is adapted for adhering (directly or via the adhesion promoting agent) to the article during the process. Below 50°C or 40°C the force of attachment defined by the attachment of the decoration to the carrier may be higher than the force of adhesion defined by the adhesion of the decoration to the article upon contact of the decoration with the article, and/or above 50°C, 60°C, or 70°C the force of attachment defined by the attachment of the decoration to the carrier may be lower than the force of adhesion defined by the adhesion of the decoration to the article upon contact of the decoration with the article. A preferred consequence of these measures is that the formed or forming article having a temperature of more than 50°C, preferably more than 60°C, 70°C or 80°C, allows for the adhesion of the decoration to the article and the detachment of the decoration from the carrier.

The decoration may rise above the surface and/or face of the carrier. Preferably, the carrier has a flat and/or uniform and/or smooth surface and/or face to which the decoration is attached.

If in this document it is referred to a "decoration" the wording shall (as far as is reasonable) preferably disclose both, the decoration and alternatively the decoration plus anything else that is detached from the carrier and/or adheres to the article (like an optional protective layer and/or the optional adhesion-promoting agent).

The carrier may comprise a separating layer which is preferably in contact with the decoration while the decoration is attached to the carrier. If a protective layer is present then the separating layer may instead be in contact with said protective layer. The separating layer preferably reduces the force of attachment defined by the attachment of the decoration and/or protective layer to the carrier as compared to the attachment of the decoration and/or protective layer to a carrier not comprising the separating layer. The separating layer is preferably made of silicone or wax. If a separating layer is used, the separating layer may be coated or laminated to the whole surface of the carrier facing the decoration. If the decoration is detached from the carrier to the article during the blow moulding process, the separating layer may remain on the carrier.

According to another aspect the carrier has a length, width and thickness, wherein its length is at least 10 times greater than its width and its width is at least 10 times greater than its thickness. Alternatively or in addition thereto the carrier may have the form of a band, strip, strap, ribbon, belt, or web which is preferably continuous. Two or more carriers may be joined end to end to allow for a continuous decoration process. The carrier may have the form of an open or closed loop, e.g. the form of a ring. For this purpose the two terminal ends of one carrier or of a number of joined carriers may be joined.

Depending on the structure of the carrier and/or on how the decoration is applied thereto the carrier may be reused. For example decorations may be continuously attached to (e.g. printed onto) a reusable, preferably belt or ring shaped carrier. The part of the carrier to which the decoration is attached may then be fed into a mould where the decoration is detached from the carrier and adheres to an article being or having been formed in the mould. The part of the carrier from which the decoration has been detached may then leave the mould and another decoration (of the same kind or of a different kind) may subsequently be attached thereto. This process may be repeated several times and may thus reduce the amount of waste.

The carrier preferably has a thickness that is at least 3, 5 or 10 times the thickness of the decoration.

A preferred thickness of the carrier may be between 6.0 and 35.0 micrometers. In one example the carrier has a thickness of approximately 23.0 micrometers. The thickness of the decoration made of printing ink may be between 0.5 to 20.0 micrometers depending on the printing process as e.g. offset printing, screen printing or digital printing, and the number of colours. In one embodiment, the thickness of the decoration is 1.0 micrometer manufactured by offset printing or laser printing and 4 micrometers manufactured by screen printing. As a few digital printers use toner for creating decorations, the term "printing ink" also includes these kinds of toner. The thickness of the separating layer if present, is in one embodiment 1.6 micrometer with a tolerance of ±0.2 micrometers. The adhesion-promoting agent if present, has in one embodiment a thickness of approximately 2.0 micrometers with a tolerance of ±0.3 micrometers. Maybe a primer will be present. The thickness of the primer will be 0.8 micrometer with a tolerance of ±0.2 micrometers. In one aspect of the invention, the decoration on the container will have a thickness between 1.0 to 10.0 and more micrometers, preferably 2.0 micrometers.

According to a preferred aspect of the invention the carrier comprises a backing material or carrier base (e.g. a foil or web) which preferably comprises or consists of a polymeric or biopolymeric carrier film or carrier web. In addition, the carrier may comprise a separating layer, preferably adjacent to the base. However, the carrier may comprise more than the aforementioned two layers. Colours on said separating layer form or are the decoration (optionally together with an adhesion-promoting agent and/or a protective layer).

Preferably, the mould defines a mould cavity and the carrier is fed into and out of the mould cavity. The part of the carrier inside the mould cavity may be curved or bent. It has been found that this facilitates the process depending on the form of the formed article. For example it may reduce or prevent the carrier from getting caught on or between protruding parts of the article when bypassing it or them. Thus, it may be possible to decorate an area on an article, wherein a width of the decoration is greater than a width between two protruding parts arranged opposite each other.

In particular, the carrier may be fed through a path provided in the mould along a movement direction into and out of the mould cavity. In this case it may be advantageous if the path is formed by slits or tunnels provided in the mould. The slits or tunnels may have at least at their points of intersection with the mould cavity a curvilinear form, in particular an S-form. Alternatively or in addition thereto the part of the carrier inside the mould cavity may be longer than the distance between the points of intersection of the two slits or tunnels through which the carrier moves into and out of the mould cavity with the mould cavity or it may be longer than the distance between the first and second inner openings in the mould as described below through which the carrier enters and leaves the mould cavity. A preferred consequence of these measures is that the part of the carrier inside the mould cavity is curved or bent.

The path may correspond to a plane intersecting the mould cavity such that opposite lateral edges of the path extend within the mould, wherein the plane is preferably flat or curved in one or in two directions.

The form and/or size of the decoration may correspond to the area defined by the intersection between the path and the mould cavity. The dimensions of the decoration or the space it requires on the carrier preferably correspond to the said area. The area defined by the intersection between the path and the mould cavity should normally be bigger than the decoration, i.e. its dimension, for example by less than 50, 30 or 20 percent. If the carrier is or forms part of the mould cavity surface (as described below) the same may apply to the area of the mould cavity surface that forms part of the carrier. It may also correspond to the form and/or size of the decoration or the sum of the decorations attached to the carrier and simultaneously present within the mould.

The carrier may be held in position within the mould while the article is formed.

The mould comprises a mould cavity with a surface wherein the decoration attached to the carrier and/or the carrier may be positioned at a distance from the mould cavity surface.

If a carrier is mentioned and if it is not clear from the context which carrier or part of the carrier is meant preferably the carrier as a whole and alternatively at least the part of the carrier within the mould is disclosed if not indicated otherwise. If a decoration is mentioned and if it is not clear from the context which decoration is meant preferably the decoration within the mould is disclosed if not indicated otherwise.

The carrier may be unwound preferably from a first reel or spool on a first side of the mould and rewound preferably onto a second reel or spool on a second side of the mould, wherein reference is made to the carrier as a whole.

The carrier may be equipped with one or more position marks.

The mould defines a cavity and the carrier may be fed through a plurality of cavities arranged one after the other.

Multiple carriers and/or decorations may be fed or introduced into the mould so that two or more decorations are attached to the article simultaneously.

The process may comprise a step of removing the carrier from the mould.

Once the adhered decoration(s) is (are) detached from the carrier and the formed and decorated article is removed from the mould, one or more additional decoration(s) may be fed into the mould and a second article may be decorated according to the herein described process.

The process of feeding the carrier into the mould and femoving from the mould is a start and stop process by virtue of positioning the carrier with the decoration in the mould and detaching the decoration from the carrier.

The mould may define a mould cavity with a surface, the surface having a shape corresponding to the outer shape of the article to be formed and the carrier is or forms preferably part of the said surface. The decoration may simply be attached to the or to part of the surface of the mould cavity, making the mould cavity surface or part thereof the carrier. Alternatively, the carrier could be or form a part of the mould that is removable from or at least movable relative to the rest of the mould. This facilitates the attachment of the decoration to the carrier. For example the carrier may be introduced into the mould via an opening. The opening may optionally penetrate the mould so that the carrier can be inserted into the mould without opening the mould, wherein opening the mould in this context means the process step necessary for removing the article from the mould. However, it is also possible that the mould cavity has a recess (as opposed to a penetrating opening) into which the carrier can be inserted and/or to which the carrier can be fastened. According to an alternative definition, part of the mould cavity surface may be replaceable wherein the replaceable part forms the carrier. In other words, the decoration may be attached to the surface of the mould cavity or to a part of the surface of the mould cavity, making the said mould cavity surface or the said part of the mould cavity surface that which in the context of the invention is called the carrier.

The decoration may (partially or in its entirety) adhere to and/or be applied, in particular printed, onto a concave area of the outer surface of the article, for example an indentation. The decoration may cover the entire indentation or parts thereof. The indentation may be formed two-dimensional or three-dimensional. If the article is a container the concave area of the outer surface may be formed by a part of the container wall that is curved in the direction of the container interior. This is another advantage of the inventive process since decoration of concave areas of an article after removal from the mould is too expensive.

The invention allows for the decoration of thin walled articles. According to an aspect of the invention the decoration may (partially or in its entirety) adhere to and/or be applied, in particular printed, onto a predetermined area of the article, wherein at least the predetermined area has a thickness between 0.10 and 0.3 millimetres. If the article or said part of the wall is made of PET (polyethylene terephthalate) the said wall thickness is preferably 0.15 to 0.3 millimetres over the whole container. It is nearly impossible to decorate an unfilled container with such a thin wall after removing it from the mould without supporting the predetermined area or the wall to be decorated by technical equipment.

The article may be formed from any mouldable material such as plastic, rubber or glass. Preferably the article is formed from a polymeric material for example: a polyolefin such as polypropylene (PP) or polyethylene (PE); a polyvinyl halide such as polyvinyl chloride (PVC); a polyester such a polyethylene terephthalate (PET), polyethylene naphthalate (PEN), polyethylene furanoate (PEF), Tritan, or polylactic acid (PLA); a polystyrene; a polyamide; a polyvinyl acetate; a polycarbonate, or mixtures thereof. More preferably the article is formed from PET, which includes homopolymers and/or copolymers thereof. PET may be derived from crude oil or plants and optionally comprises colorants, as may any of the mouldable materials.

Multiple separate, preferably spaced apart, decorations may be simultaneously present within the mould during formation of the article. This would allow for two or more separate decorations to adhere to the forming or formed article upon contact therewith. For this purpose one or more carriers may be simultaneously present within the mould, each carrier having one or more separate decorations attached thereto, the said decoration being simultaneously present within the mould during formation of the article. Of course, the presence of the carriers) within the mould refers to at least the part(s) of the carriers) to which the decoration(s) are attached which are intended for contacting and adhering to the formed or forming article. Other parts of the carrier(s) may be outside of the mould.

The invention also relates to an article decorated using a process as described herein. The article is preferably a container, for example a bottle. All features of the article mentioned in the context of the process are hereby - individually or in any combination (provided such features do not exclude each other) - also disclosed independently of the process as part of the article. For example, there is provided an in-mould decorated blow-moulded article having a concave outer surface and/or a wall thickness of less than 0.3 millimetres at least where the or part of the decoration is applied.

Furthermore, the invention relates to a process for removing a decoration from a decorated article as described herein and an article decorated using the process as described herein respectively. The said process for removing a decoration may comprise the steps of contacting the decorated article with a wash fluid (hereinafter "washing process") and removing the decoration from the decorated article.

The wash fluid may have a temperature of more than 50°C, 60°C, 70°C, or 80°C.

The washing process may comprise a step of comminuting the decorated article. Comminuting may be done by any known means of chopping, flaking, grinding, mincing, shredding, crushing, pulverising or the like. Preferably, the in-mould decorated article is comminuted into less than about 3 cm² pieces, more preferably less than about 2 cm² pieces or most preferably less than about 1 cm² pieces. The in-mould decorated article may be comminuted prior to entering the wash fluid, whilst in contact with the wash fluid or once it has been removed from the wash fluid. The in-mould decorated article may be entirely comminuted or partially comminuted.

The decoration and the article (without decoration) may separate from one another via a separating means such as electrostatic force, vacuum suction, air flow, sieving, a conveyor, filtration or density separation. Preferably, the decoration and the article separate by density separation, wherein one of either the decoration or the article is less dense than the other. More preferably, the decoration is less dense than the article. More preferably still, the decoration is less dense than both the article and the wash fluid. Most preferably the decoration is less dense than both the article and the wash fluid so that the decoration floats in the wash fluid and thus, separates from the article by floatation separation.

The wash fluid may be water, an aqueous solution or a solvent. Preferably, the wash fluid is an aqueous solution such as caustic solution; more preferably, the caustic solution comprises, sodium hydroxide, potassium hydroxide or calcium hydroxide, for example. Most preferably, the caustic solution comprises sodium hydroxide.

The wash fluid may comprise sodium hydroxide in an amount of between about 0.1 weight percent and about 5 weight percent.

The wash fluid may be heated to at least about 30°C, preferably to at least about 40°C, more preferably to at least about 50°C, even more preferably to at least about 60°C, still more preferably to at least about 70°C and most preferably to at least about 80°C.

The temperature of the wash fluid should not exceed the degradation temperature of the article and/or the decoration. Furthermore, temperatures greatly exceeding the boiling point of water are generally less preferable as the wash fluid of the present invention is preferably retained in the liquid phase. Thus, the preferred upper limits of the range of wash fluid temperatures are, for example, about 120°C, about 110°C, about 105°C, about 100°C or about 95°C.

The wash fluid may be contained in a wash bath. The in-mould decorated article, comminuted or otherwise, may be placed sequentially in one or more wash baths, which may contain wash fluids of the same or different composition.

The in-mould decorated article may be agitated, for example: shaken, stirred, churned, mixed, vibrated or the like, by any known agitating means. Preferably, the in-mould decorated article is agitated whilst in contact with the heated wash fluid which may aid the removal of the decoration from the in-mould decorated article.

Once the decoration has been removed from the in-mould decorated article, the decoration or the article (without decoration) or both, may be recovered from the wash fluid by any known recovery means such as vacuum suction, sieving, skimming off the top or directed air flow. Preferably, the decoration and the article are recovered from the wash fluid separately so that an additional separating step may not be required.

The washing process may be run continuously.

Once the decoration has been removed from the in-mould decorated article, the decoration or the article (without decoration) or both may be further processed. For example, the comminuted article may be melted down and extruded to form pellets, chips, flakes or the like, which may be used as a feedstock for producing a new article. Alternatively, if the article remains in-tact then the article may be cleaned, decorated and reused.

In addition the invention relates to a mould for manufacturing a decorated article comprising at least a first mould part and a second mould part, which first and second mould parts, when combined, define a mould cavity with a surface having a shape corresponding to the outer shape of an article to be formed in the mould.

Preferably, the mould cavity has a volume that is at least 10, 5 or 3 times greater than the volume of the material the article is made of.

Part of the mould cavity surface may form a carrier or may be part of a carrier to which a decoration is attached or attachable. Preferably, the decoration is adapted for being printed onto the article to be formed within the mould and/or the decoration is a decoration as described in this document. Preferably, the article is an article as described in this document. The said mould may be used in the decoration process as described in this document.

As described above, a mould used for decorating an article may comprise one or more slits or tunnels. The slits or tunnels have a first outer opening leading to a first inner opening and a second inner opening leading to a second outer opening. The slits or tunnels intersect with the mould cavity at the inner openings.

The first and second inner openings may be connected via one or two grooves within and/or extending along a surface of the mould cavity.

The area between the first and second inner openings may substantially correspond to the size of the decoration to be applied to an article in an in-mould decoration process. However, the size of the decoration may be smaller than said area as the decoration is easily detachable from the carrier. Thus, the carrier has not to be fixed adjacent to the decoration by the mould or other equipment. Subsequently, said area may be many times greater than the decoration. Moreover, the outer contour of the decoration may not be corresponding to the outer contour of said area.

Furthermore, the slit or tunnel may define a gap substantially corresponding to the width and thickness of the carrier with the decoration fed through the slit or tunnel.

The slit or tunnel may define a plane or curved path.

According to another aspect the mould and/or mould cavity may comprise a recess for forming a protrusion or bulge on the article, on which the decoration is applied during the in-mould decoration process. It is preferred that the slit or tunnel intersects the recess in a plane substantially parallel to a bottom face of the recess.

The decoration is preferably detached from the carrier after binding of the forming article with the decoration.

Advantageously, the decoration may be effectively adhered to the article whilst still being attached to the carrier. In this way the process of the invention effectively eliminates an entire step in a conventional in-mould labelling process - the previously necessary step of removing a label altogether from a labelstock web before positioning the removed label in a mould. Another possible advantage of the process of the invention is that the decoration may be held in the desired position until adhered to the article without the need for additional positioning means, such as vacuum suction. However, in some cases it may be desirable for some form of such additional conventional positioning means, such as vacuum suction or electrostatic attachment, to be employed to ensure correct positioning of the carrier in the mould so that final securement of the decoration is in the correct position with regard to the blown article - i.e. the final decoration on the decorated article is positioned correctly.

Preferably the step of detaching the decoration adhered to the article from the carrier is effected by removing the formed and decorated article from the mould.

The decoration may be a heat-resistant printing ink. The printing ink may, therefore, withstand the elevated temperatures during the moulding process.

In the following preferred features of the mould and preferred process steps associated therewith are disclosed in more detail.

After removal of the decoration, the carrier (i.e. the section of the carrier from which the decoration has been removed) may be recovered from the mould by means of winding a spool, gravity, vacuum suction, electrostatic forces or another recovery means. Preferably, the carrier is recovered from the mould once the in-mould decorated article is formed. More preferably, the carrier is recovered from the mould once the formed in-mould decorated article has been removed from the mould.

A second decoration may be fed into the mould and a second article decorated according to the in-mould decoration process. Preferably, the second decoration is fed into the mould by winding the carrier forward. The second decoration may be fed into the mould by winding the carrier forward once the previous decoration has detached from the carrier. Preferably, the second decoration may be fed into the mould by winding the carrier forward once the previous decoration has detached from the carrier and the formed and decorated article has been removed from the mould.

According to another aspect of the invention, during the decoration process the carrier may enter the mould through a first outer opening and leave it through a second outer opening. The first and/or second outer openings are preferably arranged in a mould half. More preferably, the said openings are positioned on opposite sides of the mould, mould half or mould portion.

In the context of the present invention the term 'mould half' does not necessarily mean half of a mould. Rather, the term 'mould half' in this context means a part of the mould which, together with another mould half, is intended to form a mould and a mould cavity respectively. The mould may define a cavity.

The first and second openings may be connected via a tunnel that intersects the cavity of the mould. The tunnel may define the path of the carrier and/or decoration through the mould body. The cavity may divide the tunnel into two parts, a first part of the tunnel starting at the first outer opening and ending at a first inner opening on the cavity wall and a second part of the tunnel starting at a second inner opening on the cavity wall and ending at the second outer opening.

According to another aspect of the present invention, there may be one or more tunnels per mould and/or per mould half or mould portion. This may apply to one or both mould halves and/or one or more mould portions. The tunnels may be arranged one upon the other and/or on opposite sides of the mould. For example, there could be two parallel tunnels in one mould half and another tunnel in the other mould half to apply two decorations on the front of the article and one on the back thereof. Regarding the direction of movement of the carrier through the tunnels, the tunnels may or may not be (substantially) parallel to one another. They may for example be arranged at an angle of at least 0°, 5°, 10° or 30° and/or at an angle of at most 90°, 80° or 60° to one another and/or to the central axis of the mould cavity.

A single carrier may carry one or more different decorations (having for example different sizes, shapes and/or different print and/or colours etc.) which may be present within the same mould cavity at the same time, thus providing a highly flexible decoration process.

The area between the first and second inner openings may define a window in which a section of the carrier carrying a decoration is positioned prior to the article being formed, for example, prior to the blow moulding step. Preferably, the side of the decoration facing towards the cavity interior (i.e. towards the article) which is optionally coated with an adhesion-promoting agent bonds to the resin material of the article when it is still hot. Thus, the decoration itself or the adhesion-promoting agent are preferably heat activatable as described previously. Preferably, the carrier, in particular the area surrounding and/or adjoining the decoration, does not bond to the article. For this reason, the carrier may not be coated with an adhesion-promoting agent for bonding to the article. The carrier may be uncoated or optionally coated with a material which does not bond to the article resin, so that it can be recovered from the mould cavity after the article has been removed from the mould. If a layer of adhesion-promoting agent is present on the carrier, a non-bonding material may be applied on top of the adhesion-promoting agent.

The first and second inner openings may be connected via one or two grooves within and/or extending along the surface of the cavity. This allows for one or both of the margins of the carrier to cross the cavity within said grooves. In this way, only part of the width of the carrier may be presented to the article during its formation (i.e. during the moulding or inflating of the article). Thus, when the article expands it preferably does not contact the carrier across its entire width. A similar effect may be achieved by presenting the carrier to the article with one or both margins of the carrier bent towards the mould. According to a more general definition, it is advantageous in the context of the invention that the mould body covers part of the carrier in the area of one or both margins of the carrier. Thus, covering parts of the carrier may support detaching the decoration or margins from the carrier. According to yet another embodiment, on the side of the carrier that faces the article the mould may provide an opening that preferably may correspond to the decoration in form and/or in size. It may be conceivable that the opening may have the same form but be substantially larger in size than the decoration.

According to another aspect of the invention, the area of the cavity between the first and second inner opening (i.e. on the side of the carrier opposite of the article) may form a recess wherein the recess preferably corresponds to the decoration in form and preferably also in size. In this way the article, while expanding and after contacting the decoration, may expand further in the direction of the cavity wall. The resulting protrusion may then have the form of the decoration and may be covered by the decoration.

In cross-section (perpendicular to the movement direction of the carrier) the tunnel preferably has (in whole or in part) the form of a straight or a curved line. A curved line may have one, two or more points of inflection, wherein a point of inflection is a point where the curved line changes its curvature from left to right (or *vice versa*). Additionally or alternatively the first and/or the second inner opening of the tunnel may have the form described above for the cross-section of the tunnel. Using a tunnel that is straight in cross-section is easiest to implement and useful in a wide range of applications. In particular, the carrier may move straight within a plane and may thus present a planar surface (and thus a planar decoration) to the article during its formation (i.e. during the moulding of the article). Other applications however may require that the decoration (and/or the part of the carrier carrying the decoration) which is present within the mould during the formation of the article and which is presented to the article during its formation to be bent, contorted, or even twisted. In particular, it may be bent or curved in one or two directions or dimensions, wherein the said direction may for example correspond to the movement direction of the carrier or may be perpendicular thereto.

It has been described that in cross-section (perpendicular to the movement direction of the carrier) the tunnel preferably has the form of a straight or a curved line, the line having two end points one at each end. If the orientation of a straight line through said end points is defined as the orientation of the cross-section of the tunnel, it can be said that the cross-section may preferably be oriented parallel to the longitudinal or central axis of the cavity or the article, or at an angle of at least 0°, 5°, 10°, or 30° and/or at most 90°, 70° or 60° thereto. Preferably, the cross-section of the tunnel serving as reference point in this context is the cross-section in the area at or between the two inner openings of the tunnel. If there is more than one tunnel the above mentioned may apply to one or more of them.

If it is not sufficiently clear from the context what the angle between two lines (e.g. the central axis of the article and a straight line defining the orientation of the cross-section of the tunnel) means, for example because the two lines (first and second line) do not cross the said angle is to be understood as the angle between the first line and the line defined by the orthographic projection of the second line upon the first line along or parallel to the shortest path between the first and second lines.

According to another aspect of the invention, a part of the cavity wall arranged in the area between the first and second inner opening (i.e. on the side of the carrier opposite of the article) may be replaceable and/or movable relative to the mould and/or removable from the mould. This allows for the variation of the surface of the cavity wall in the area behind the decoration. Such parts may have different surfaces facing the carrier. Additionally or alternatively such parts may serve as carriers (cf. above).

The carrier may be fed through a path provided in the mould along a movement direction, which corresponds to the longitudinal direction of the carrier, into and out of the cavity. This has the advantage that decorations of different sizes can be applied to different locations on the article. The path for transporting the carrier is preferably formed by a slit or tunnel provided in the mould body. The dimension of the slit or tunnel leading into the mould may differ from the dimension of the slit or tunnel leading out of the mould as the carrier fed into the mould has attached the decoration whereas the carrier fed out of the mould may be without decoration.

The path may correspond to a plane intersecting the mould such that opposite lateral edges of the path extend within the mould body, wherein the plane is preferably flat or curved in one or in two directions. This means that the inventive in-mould decoration process can be used in connection with any type of article shape.

The form and/or size of the decoration may correspond to the area defined by the intersection between the path and the cavity of the mould. Accordingly, only the decoration may be exposed to the resin, the expanding hose or tube, during the moulding or blow moulding process so that it can easily be detached from the carrier. A preferred feature of the process is that the decoration attached to the carrier may be positioned at a distance from the mould wall. This means that the decoration may adhere to the inflating hose before the article has reached its final shape. Consequently, the decoration may also be expanded and deformed to a certain extent. The expanded or deformed decoration may have a surface area that is more than 1 %, preferably more 3%, and most preferably more than 5% greater than the surface area of the original decoration, i.e. before expansion or deformation. It is understood that a decoration material is selected which is sufficiently elastic in order to allow the required expansion. It may be provided that the decoration is selected (e.g. in terms of its size, orientation, position and/or print weight) to account for the expansion and/or deformation during the process. During the moulding process, the decoration may deform into embossing, debossings, concave or convex three-dimensional structures while pressed against corresponding mould portions and/or the mould wall.

The carrier may be equipped with position marks which allow an exact positioning of the decoration within the mould. The position marks may be in the form of optical markers or indentations at the lateral edges of the carrier. The carrier may be introduced into the cavity at any angle, i.e. parallel or orthogonal, relative to the longitudinal axis of the cavity or at any angle therebetween.

The carrier may be fed through a plurality of cavities arranged one after the other. The in-mould decoration process is especially useful in connection with linear blow moulding machines where a plurality of identical cavities are provided within a single mould - in contrast to rotary blow moulding machines where a number of blow moulding tools are located on a rotating wheel.

According to another aspect of the present invention, there may be provided a mould for manufacturing an in-mould decorated article comprising at least a first mould part and a second mould part, which first and second mould parts, when combined, define a mould cavity with an inner shape corresponding to the outer shape of an article to be formed in the mould.

The mould may be further characterised in that in at least one of the first and second mould parts, a slit or tunnel is provided which intersects the mould cavity. This may allow a carrier comprising spaced-apart decorations to be fed through the cavity or sections of the cavity.

The slit and/or tunnel may have a first outer opening leading to a first inner opening and a second inner opening leading to a second outer opening. The first and second inner openings may be connected via one or two grooves within and/or extending along a surface of the mould cavity. The area between the first and second inner openings may substantially correspond to the size of the decoration to be applied to the article in the in-mould decoration process.

The slit and/or tunnel may define a gap substantially corresponding to the width and thickness of a carrier fed through the slit and/or tunnel. Additionally or alternatively, the slit and/or tunnel may define a plane or curved path.

The mould may further comprise a recess for forming a protrusion or bulge on the article. The carrier with the decoration may be applied to the protrusion or bulge during the in-mould decoration process. The slit and/or tunnel may intersect the recess in a plane substantially parallel to a bottom face of the recess.

There is provided independently and in combination with any of the features disclosed in this document an in-mould decoration process wherein the process comprises adhering, in particular printing, within a mould a decoration onto an article, preferably a container, being formed or having been formed in the mould. Forming of the article preferably includes the expansion, in particular the inflation, of the article within the mould. The article is preferably formed by extrusion blow moulding, by stretch blow moulding, or by stretch blow moulding a preform. Furthermore, it is preferred that the adhesion or the printing of the decoration takes place while the article is still hot, e.g. while its surface temperature is above 50, 60 or 70 degrees Celsius.

Furthermore, the carrier with the decoration may be treated with an antistatic agent. This may prevent the so treated carrier with the decoration from attracting dust or it may at least reduce the amount of dust or other particles accumulating on the said carrier (as compared to a carrier not treated with the antistatic agent).

Furthermore, it may be possible to arrange a cleaning station removing most or all of the dust from the carrier with decoration or at least reducing the amount of dust or other particles having accumulated on the said carrier in front of the path feeding into the mould and/or at the first outer opening (as described above) leading into the mould. The cleaning station may for example comprise electrically earthed brushes and/or an ionisation unit to ionize air which is directly blown onto the carrier with the decoration optionally combined with a vacuum unit, in particular a vacuum fan, extracting the dust removed from the carrier.

Accordingly, the process may comprise removing dust, or more generally particles, from the carrier and/or the decoration attached thereto prior to them entering the mould. Preferably, the above mentioned equipment is used for this purpose. In order to prevent re-accumulation of particles on the carrier or decoration it is preferred that the above mentioned process step is carried out immediately or shortly before entry of the carrier and/or decoration into the mould or at the first outer opening leading into the mould.

The present invention is more specifically described with reference to the following schematic figures:
- Figure 1:: shows a section of a carrier in the stretch blow moulding area wound onto spools;
- Figure 2:: shows a preform being stretch blow moulded, adhering to a decoration of the carrier and the decoration detached from the carrier;
- Figure 3:: shows a mould cavity wherein an article is blown and contacts a limited area of the carrier;
- Figure 4:: shows the carrier with decorations attached thereto;
- Figure 5:: shows a mould and the carrier that forms part of the mould cavity surface;
- Figure 6:: shows schematically a mould and the carrier which is fed through;
- Figure 7:: shows a mould with multiple cavities arranged where the carrier is fed through all the cavities;
- Figure 8:: shows a top view of the inside of a mould half with a cylindrical deepening;
- Figure 9:: shows a side view of the deepening of Figure 8;
- Figure 10:: shows a cross-section through the deepening of Figure 8;
- Figure 11:: shows the deepening of Figure 8 in greater detail;
- Figure 12:: schematically shows different views of a cylindrical mould half with a carrier path that extends within a plane;
- Figure 13:: schematically shows different views of a cylindrical mould half with a carrier path that is curved perpendicular to the feeding direction;

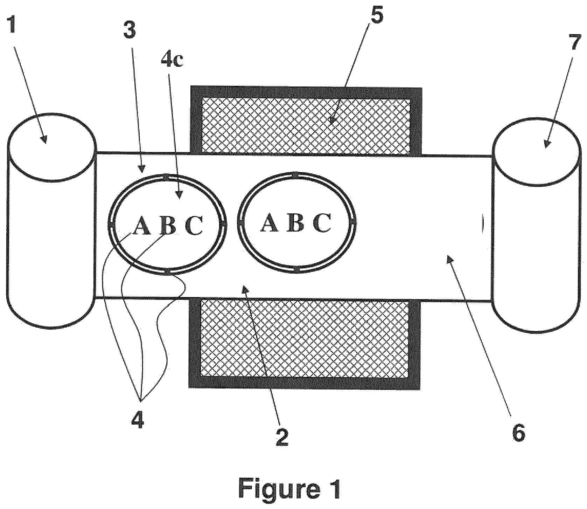

With reference to **Figure 1**, there is schematically shown a carrier **2** to which a decoration **3** is attached, different elements of the decoration being indicated by reference sign **4.** The elements **4** of the decoration **3** in this example are spaced apart from one another. Between said elements **4** there are decoration-free areas **4c.** The carrier **2** is fed into a stretch blow moulding area **5** using spools **1, 7,** where an in-mould decorated article is formed. The decoration **3** detaches from the carrier **2** in the stretch blow moulding area leaving just the blank or empty (i.e. decoration-free) carrier parts **6.** By winding spool **7** forward, the decoration-free carrier part **6** is removed from the stretch blow moulding area **5** and a new decoration 3 attached to the carrier **2** is fed into the stretch blow moulding area **5** from spool **1.**

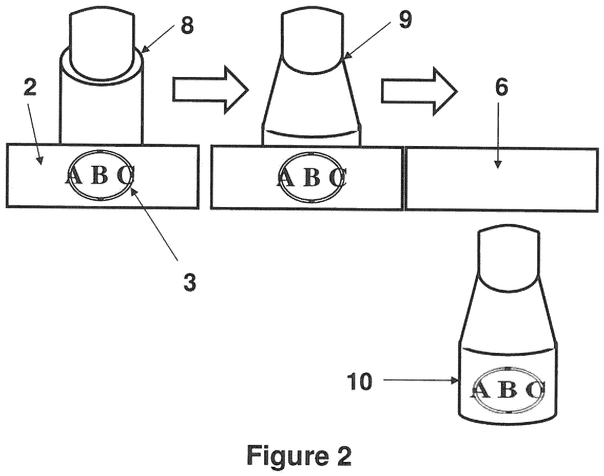

With reference to the schematic drawing in **Figure 2**, there is shown a carrier **2** comprising a decoration **3** attached to the carrier **2.** The decorations **3** are positioned in a row on the carrier **2.** A preform **8** is stretch blow moulded into a stretch blow moulded article **9.** During stretch blow moulding, the decoration **3** contacts the article **9** and effectively adheres to it. The decoration **3** detaches from the carrier **2** as the in-mould decorated article **10** is removed from the mould, leaving just the blank carrier part **6** in the mould.

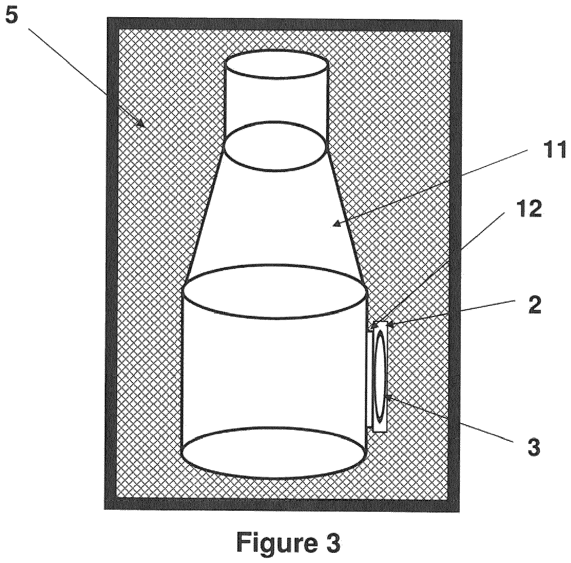

Referring now to the schematic drawing in **Figure 3****,** there is shown a mould cavity **11** in the desired shape for the article to be formed. The mould cavity is positioned within the stretch blow moulding area **5.** The carrier **2** to which a decoration **3** is attached is fed into the stretch blow moulding area **5** such that the adhesion-promoting agent (e.g. an adhesive layer) on the decoration **3** faces into the mould cavity **11 (i.e. faces to the article to be formed).** The mould is arranged such that the stretch blow moulded article only contacts the carrier **2** in a limited area **12.**

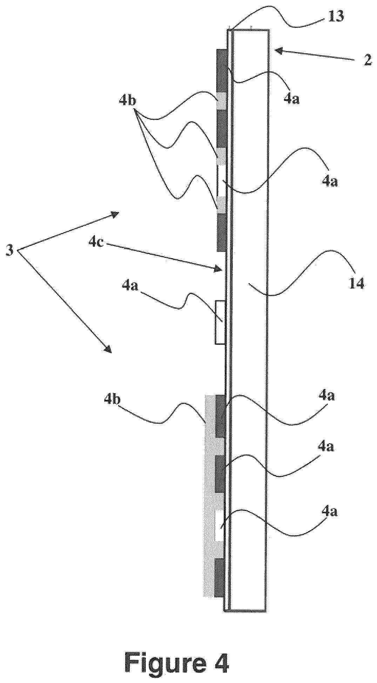

With reference to **Figure 4**, there is shown a carrier **2** comprising a carrier base **14**, e.g. a carrier liner, preferably made of paper or polymer, with a separating layer **13**, preferably made of Silicone, on which a decoration **3** is provided. The decoration **3** comprises decoration elements **4a** of different colours. Elements **4a** of the decoration may be separated from other elements of the decoration by gaps and/or empty (decoration-free) areas **4c** between elements **4a** of the decoration. The spaces between elements **4a** may also be partially filled by other elements of the decoration that form a background colour **4b.** The background colour **4b** may fill the spaces between elements **4a** of the decoration without (or with only partially) covering the parts of the said elements **4a** facing the article (as shown in the upper half of the Figure). The background colour **4b** may however also be applied upon the other elements **4a** of the decoration so that the background colour **4b** covers the parts of the said elements **4a** facing the article (as shown in the lower half of the Figure). For example, the element of the decoration that is the background colour **4b** may be activatable while the elements **4a** which it covers (lower part of Figure 4) are not activatable. According to a more general definition, it is advantageous in the context of the invention that two or more elements of the decoration are made of substances that differ in more than just their colour. Some elements may as a result be activatable while others are not or at least less activatable.

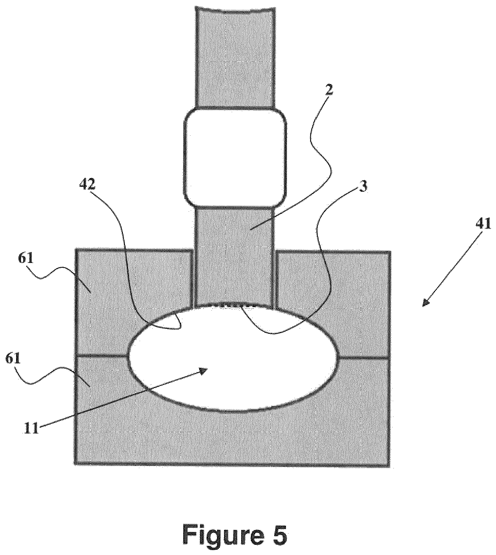

As shown in **Figure 5**, the carrier **2** may form part of the mould **41**, in particular part of the mould cavity surface **42.** In the depicted example the carrier **2** is held within an opening that penetrates the mould **41** having a mould cavity **11** with a mould cavity surface **42.** The decoration **3** is attached to the part of the carrier **2** that forms part of the mould cavity surface **42**. As such the carrier **2** together with the rest of the mould cavity surface **42** defines the outer shape of the formed article. The carrier **2** is preferably removable via the aforementioned opening in the mould **41** so that the decoration **3** may be attached thereto outside of the mould **41.**

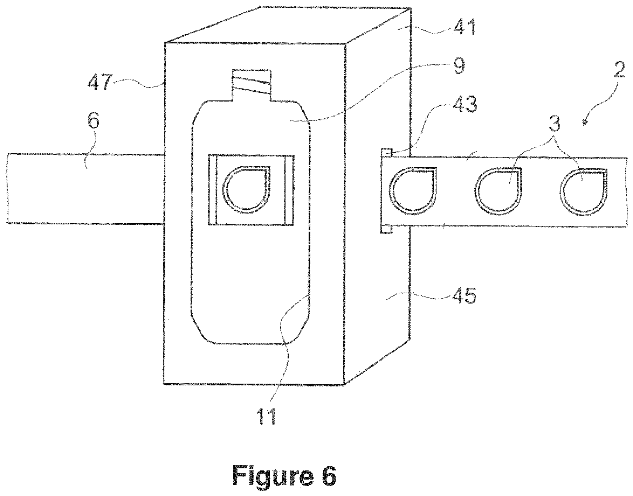

With reference to **Figure 6****,** there is shown the mould **41** with the cavity **11** through which the carrier **2** is fed. The carrier **2** enters the mould **41** interior through a slit **43** or tunnel provided at the lateral side **45** of the mould. After the removal of the decoration **3** the empty carrier **6** leaves the mould **41** through a second slit at the opposite side **47.** A section of the carrier **2** with the decoration **3** is positioned inside the cavity **11** and is thereby exposed to the inflating hose or tube, which forms the article. In order to prevent adhesion of the empty (i.e. "decoration-free") carrier **6** to the article, the surface of the empty carrier **6** directed towards the cavity interior may be uncoated or coated with a layer of material which does not bond to the article, for example a silicone or wax layer. The decoration **3** itself may be partially or entirely coated with an adhesive on the side oriented towards the article, preferably a heat activatable adhesive layer. Whereas the carrier **2** may be uncoated or coated with a layer which does not bond to the hot resin material of the article. Of course the decoration is not considered a part of the carrier or a coating in this context.

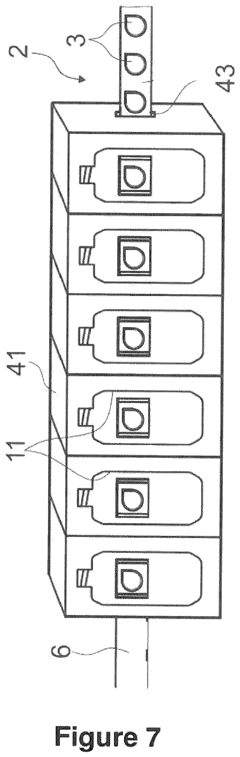

As can be seen from **Figure 7**, the carrier **2** can be fed through a plurality of cavities **11** of a single mould **41.** The distance between two adjacent decorations **3** on the carrier **2** can be chosen to be the same, a fraction or a multiple of the distance between two adjacent cavities **11** within the mould **41.**

The present in-mould decoration process is particularly useful in connection with linear blow moulding machines where one or more rows of spaced apart cavities are provided in a single mould so that the carrier can be fed through a plurality of cavities.

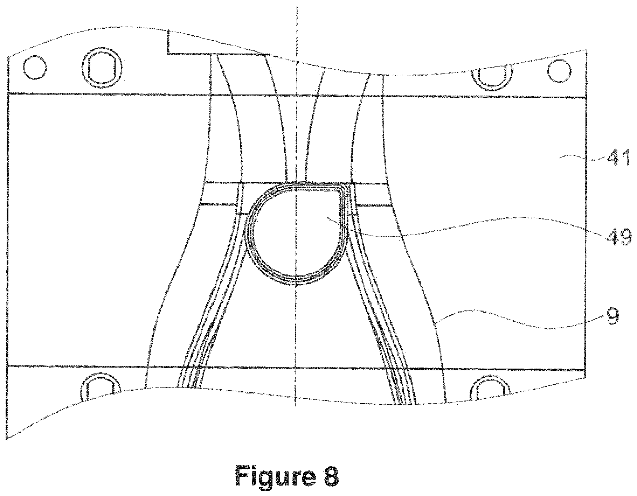

With reference to **Figure 8****,** there is shown a top view of a section of a mould **41** with a recess **49** corresponding to and resulting in the formation respectively of a bulge or projection on the finished article, e.g. a container. During the moulding process the carrier with the decoration is positioned at said bulge or projection so that with the inflation of the article (e.g. container) the decoration is effectively adhered to the still hot plastic material.

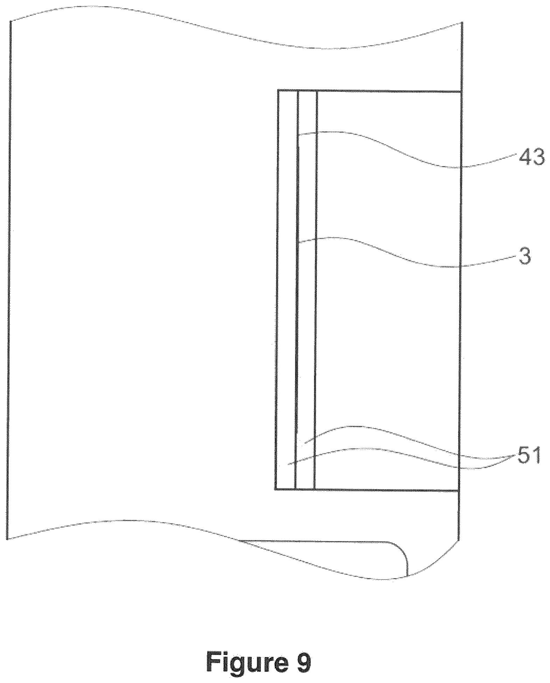

In **Figure 9** there is shown the slit **43** through which the carrier **2** is introduced into the cavity. On opposite sides of the slit **43** bezels **51** are provided which facilitates the feeding of the carrier **2** into the cavity.

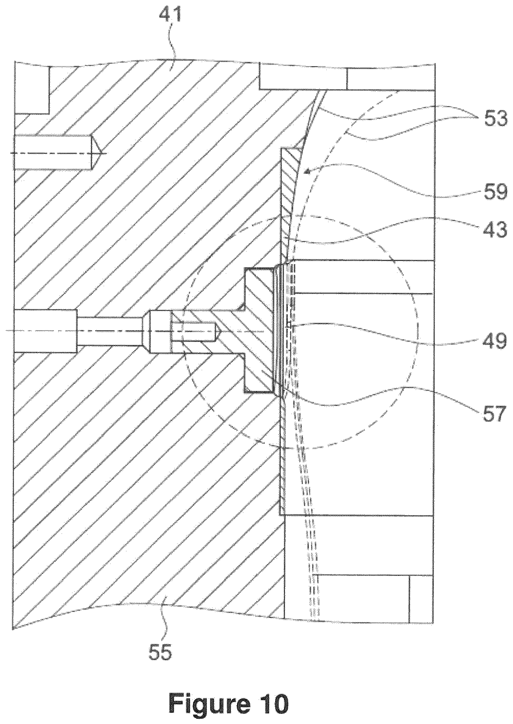

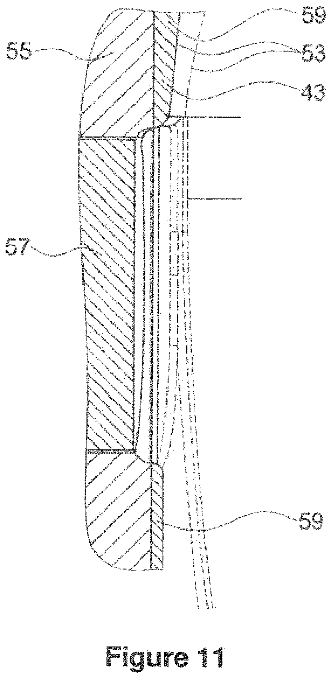

In an embodiment of a mould **41** (as shown in **Figures 10** **and** **11**) with an inner contour **53** the slit **43** for the carrier **2** intersects the recess **49** approximately in the middle of its depth and extends beyond the recess **49** so that a margin of the carrier extends within the body **55** of the mould **41.** Preferably, the slit **43** intersects the recess **49** in a plane substantially parallel to the bottom face of the recess. As can be best seen from **Figure 11****,** the slit **43** has a substantially constant gap through its entire width. The ratio of the width of the slit **43** to the width of the recess **49** is preferably in the range between 6:1 and 1:6 and most preferably between 3:1 and 1:3.

In the embodiment shown in **Figure 10** there is provided a first insert **57** or die, the front side of which can have different shapes so that concave, flat or convex areas of the article can be formed in the moulding process. A second insert **59** forms in connection with the mould body a slit **43** through which the carrier can be introduced into and out of the cavity. Irrespective of other features shown in Figure 10 an insert 57 may also be used as carrier (see also Figure 5). If a heated preform or parison is blown to an article, the residual heat of the preform or article activates the adhesion-promoting agent coated to the decoration, by radiant heat and/or contact heat. An outer side of the article is pressed against the activated adhesion-promoting agent of the decoration by a force caused by gas pressure with which the preform or parison is blown up. During the removal of the article from the cavity, the decoration adhered to the article will detach from the carrier.

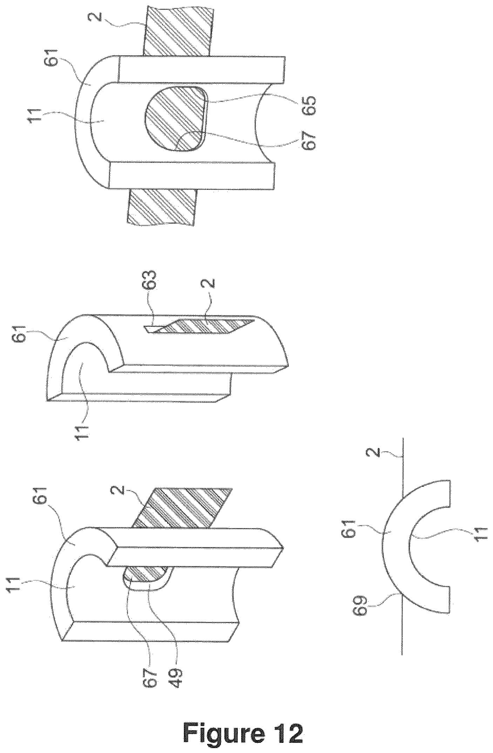

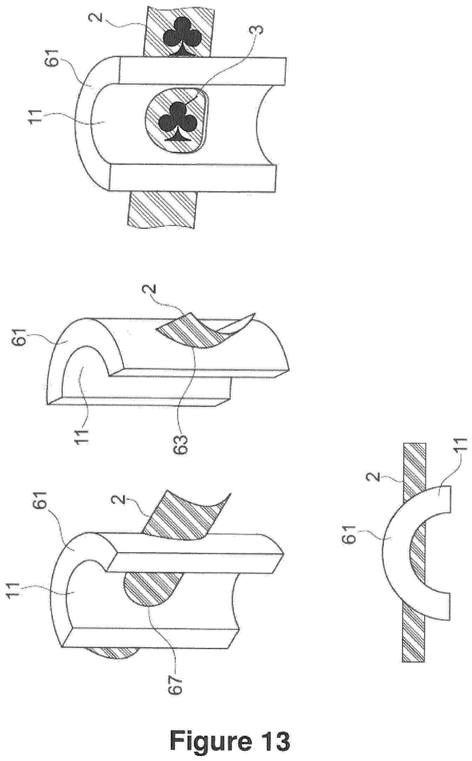

**Figures 12** **and** **13** show, by way of illustration only, a carrier **2** that is transported through a cylindrical mould body along different shaped paths. The schematic representation of **Figure 12** corresponds to the embodiment shown in Figures 8 to 11 where in one mould half **61** there is provided the recess **49.** The carrier path leads through the sidewalls of said recess **49** whereby the path may be provided at a distance from the bottom face of the recess. The carrier **2** is fed into the mould cavity through a first outer opening **63** leading to a first inner opening **65** into the cavity **11**, and leaves the cavity through a second inner opening **67**, which leads to a second outer opening **69.**

In **Figure 13** the carrier path is straight along its movement direction and curved perpendicular thereto. As in the other embodiments the window of the carrier path (corresponding to the intersection of the carrier path with the inner mould surface) substantially corresponds to the size of the decoration.
- 1: spool
- 2: carrier
- 3: decoration
- 4: elements of the decoration
- 4a: coloured elements of the decoration
- 4b: background colour of the decoration
- 4c: space between elements of the decoration
- 5: moulding area
- 6: blank / empty parts of carrier from which decoration has been removed
- 7: spool
- 8: preform
- 9: article
- 10: decorated article
- 11: mould cavity
- 12: limited area contacting forming article
- 13: separating layer
- 14: carrier base / backing material
- 41: mould
- 42: mould cavity surface
- 43: slit / tunnel
- 45: lateral side of mould
- 47: opposite side of mould
- 49: recess
- 51: bezel
- 53: inner contour
- 55: body of mould
- 57: first insert
- 59: second insert
- 61: mould halves
- 63: first outer opening
- 65: first inner opening
- 67: second inner opening
- 69: second outer opening

## Claims

1. An in-mould decoration process for the manufacture of a decorated article (10) comprising the steps of:
- feeding a carrier (2) with a decoration (3, 4, 4a, 4b) attached thereto into a mould (41);
- forming by extrusion blow moulding or stretch blow moulding an article (9) in the mould (41) such that the article (9) contacts and adheres to the decoration (3, 4, 4a, 4b);
- irreversibly detaching the decoration (3, 4, 4a, 4b) adhered to the article (9) from the carrier (2); and
- removing the formed and decorated article (10) from the mould (41);
wherein
- using a temperature below 40°C such that the force of attachment defined by the attachment of the decoration (3, 4, 4a, 4b) to the carrier (2) is higher than the force of adhesion defined by the adhesion of the decoration (3, 4, 4a, 4b) to the article (9) upon contact of the decoration (3, 4, 4a, 4b) with the article (9), and
- using a temperature above 50°C such that the force of attachment defined by the attachment of the decoration (3, 4, 4a, 4b) to the carrier (2) is lower than the force of adhesion defined by the adhesion of the decoration (3, 4, 4a, 4b) to the article (9) upon contact of the decoration (3, 4, 4a, 4b) with the article (9),
so that the forming article (9) having a temperature of more than 50°C allows for the adhesion of the decoration (3, 4, 4a, 4b) to the article (9),
**characterized in that**
the decoration (3, 4, 4a, 4b) is made of printing ink wherein the decoration (3, 4, 4a, 4b) in a further process step is removable from the decorated article (10) by contacting the decorated article (1) with a wash fluid, the wash fluid having a temperature of at least 50°C and not exceeding the degradation temperature of the article (10).

2. A process according to claim 1, wherein the printing ink of the decoration (3, 4, 4a, 4b) is made of one or more coloured substances, preferably one or more print colours, in particular one or more kinds of ink or paint.

3. A process according to one of claims 1 to 2, wherein the decoration (3, 4, 4a, 4b) comprises several spaced apart coloured elements (4a) of the same colour or of different colours, for example letters, characters, or figures.

4. A process according to claim 3, wherein the decoration (3, 4, 4a, 4b) comprises a coloured layer (4b) connecting and preferably filling the spaces (4c) between the spaced apart coloured elements (4a), wherein the coloured layer (4b) is preferably closer to the article (9) than the coloured elements (4a), thereby forming as part of the decoration a background colour on the decorated article (10), wherein the coloured layer is made of printing ink.

5. A process according to one of claims 1 to 4, wherein the decoration (3, 4, 4a, 4b) adheres directly or via an adhesion-promoting agent to an outer surface of the article (9).

6. A process according to claim 5, wherein the decoration (3, 4, 4a, 4b) or the adhesion-promoting agent is heat activatable and/or pressure activatable, wherein heat and/or pressure causes the adhesion or an increased adhesion thereof to the article (9), wherein preferably neither the decoration (3, 4, 4a, 4b) nor, if present, the adhesion-promoting agent are on the side facing the article (9) adhesive at 25°C while the decoration (3, 4, 4a, 4b) is still attached to the carrier (2).

7. A process according to one of claims 1 to 6, wherein the decoration (3, 4, 4a, 4b) is removable from the decorated article (10) by contacting the decorated article (1) with a wash fluid, the wash fluid having a temperature of at least 60°C, preferably at least 70°C, or more preferably at least 80°C.

8. A process according to one of claims 1 to 7, wherein the carrier (2) comprises a separating layer (13) which is in contact with the decoration (3, 4, 4a, 4b) while the decoration (3, 4, 4a, 4b) is attached to the carrier (2), wherein the separating layer (13) reduces the force of attachment defined by the attachment of the decoration (3, 4, 4a, 4b) to the carrier (2) as compared to the attachment of the decoration (3, 4, 4a, 4b) to a carrier (2) not comprising the separating layer (13), wherein the separating layer (13) is preferably made of silicone or wax.

9. A process according to one of claims 1 to 8, wherein
- the carrier (2) has the form of a flexible linear strip,
- the mould (41) defines a mould cavity (11); and
- the carrier (2) is fed through a path provided in the mould (41) along a movement direction into and out of the mould cavity (11).

10. A process according to claim 9, wherein the path is formed by a slit or tunnel (43) provided in the mould (41), wherein
- the slit or tunnel (43) has at least at its points of intersection with the mould cavity (11) a curvilinear form, in particular an S-form; and/or
- the part of the carrier (2) within the mould cavity (11) is longer than the distance between the points of intersection of the slit or tunnel (43) with the mould cavity (11); so that the part of the carrier (2) within the mould cavity (11) is curved or bent.

11. A process according to one of claims 1 to 8, wherein
- the mould (41) defines a mould cavity (11) with a surface (42), the mould cavity surface (42) having a shape corresponding to the outer shape of the article (9) to be formed; and
- the carrier (2) forms part of the said mould cavity surface (42).

12. A process according to one of claims 1 to 11, wherein the decoration (3, 4, 4a, 4b) adheres to a concave part of the outer surface of the article (9).

## Patentansprüche

1. Ein In-Mould Dekorationsverfahren zur Herstellung eines dekorierten Gegenstands (10), umfassend die Schritte:
- Zuführen eines Trägers (2) mit einem daran befestigten Dekor (3, 4, 4a, 4b) in eine Form (41);
- Formen eines Gegenstandes (9) durch Extrusionsblasformen oder Streckblasformen in der Form (41) derart, dass der Gegenstand (9) das Dekor (3, 4, 4a, 4b) berührt und daran haftet;
- irreversibles Ablösen des auf dem Gegenstand (9) haftenden Dekors (3, 4, 4a, 4b) vom Träger (2); und
- Entnehmen des geformten und dekorierten Gegenstands (10) aus der Form (41),
wobei eine Temperatur unterhalb von 40 ° C verwendet wird, sodass die durch das Anbringen des Dekors (3, 4, 4a, 4b) an dem Träger (2) definierte Anhaftungskraft höher ist als die Anhaftungskraft definiert durch die Haftung des Dekors (3, 4, 4a, 4b) an dem Gegenstand (9) beim Kontakt des Dekors (3, 4, 4a, 4b) mit dem Gegenstand (9) und
- eine Temperatur über 50 °C verwendet wird, sodass die durch das Anbringen des Dekors (3, 4, 4a, 4b) am Träger (2) definierte Haftkraft geringer ist als die durch das Anhaften des Dekors (3, 4, 4a, 4b) definierte Haftkraft am Gegenstand (9) beim Kontakt des Dekors (3, 4, 4a, 4b) mit dem Gegenstand (9), sodass der Formgegenstand (9) mit einer Temperatur von mehr als 50 °C das Anhaften des Dekors (3, 4, 4a, 4b) an dem Gegenstand (9) ermöglicht,
**dadurch gekennzeichnet,**
**dass** das Dekor (3, 4, 4a, 4b) aus Druckfarbe besteht, wobei das Dekor (3, 4, 4a, 4b) in einem weiteren Verfahrensschritt vom dekorierten Gegenstand (10) entfernbar ist, indem der dekorierte Gegenstand mit einer Waschflüssigkeit, die eine Temperatur von mindestens 50 °C aufweist und die Degradationstemperatur des Gegenstands (10) nicht übersteigt, kontaktiert wird.

2. Verfahren nach Anspruch 1, **dadurch gekennzeichnet, dass** die Druckfarbe des Dekors (3, 4, 4a, 4b) aus einer oder mehreren farbigen Substanzen, vorzugsweise einer oder mehreren Druckfarben, insbesondere einer oder mehreren Arten von Tinte oder Farbe besteht.

3. Verfahren nach einem der Ansprüche 1 bis 2, **dadurch gekennzeichnet, daß** das Dekor (3, 4, 4a, 4b) mehrere voneinander beabstandete farbige Elemente (4a) gleicher Farbe oder unterschiedlicher Farben, beispielsweise Buchstaben, Zeichen oder Figuren, aufweist.

4. Verfahren nach Anspruch 3, wobei das Dekor (3, 4, 4a, 4b) eine farbige Schicht (4b) aufweist, die die Räume (4c) zwischen den voneinander beabstandeten farbigen Elementen (4a) verbindet und vorzugsweise ausfüllt, wobei die farbige Schicht (4b) vorzugsweise näher am Gegenstand (9) ist als die farbigen Elemente (4a), wodurch als Teil der Dekoration eine Hintergrundfarbe auf dem dekorierten Gegenstand (10) gebildet wird, wobei die farbige Schicht aus Druckfarbe besteht.

5. Verfahren nach einem der Ansprüche 1 bis 4, wobei das Dekor (3, 4, 4a, 4b) direkt oder über einen Haftvermittler an einer Außenfläche des Gegenstandes (9) haftet.

6. Verfahren nach Anspruch 5, **dadurch gekennzeichnet, dass** das Dekor (3, 4, 4a, 4b) oder der Haftvermittler wärmeaktivierbar und / oder druckaktivierbar ist, wobei Wärme und / oder Druck die Haftung oder eine erhöhte Haftung derselben am Gegenstand (9) bewirkt, wobei vorzugsweise weder das Dekor (3, 4, 4a, 4b) noch, falls vorhanden, der Haftvermittler auf der dem Gegenstand (9) zugewandten Seite bei 25 ° C klebend sind, während das Dekor (3, 4, 4a, 4b) noch am Träger (2) befestigt ist.

7. Verfahren nach einem der Ansprüche 1 bis 6, wo wobei das Dekor (3, 4, 4a, 4b) vom dekorierten Gegenstand (10) entfernbar ist, indem der dekorierte Gegenstand mit einer Waschflüssigkeit, die eine Temperatur von mindestens 60 °C, vorzugsweise mindestens 70 °C, oder noch bevorzugter mindestens 80 °C aufweist, kontaktiert wird..

8. Verfahren nach einem der Ansprüche 1 bis 7, **dadurch gekennzeichnet, dass** der Träger (2) eine Trennschicht (13) aufweist, die mit dem Dekor (3, 4, 4a, 4b) in Kontakt steht, während das Dekor (3, 4, 4a, 4b) am Träger (2) angebracht ist, wobei die Trennschicht (13) die durch das Anbringen des Dekors (3, 4, 4a, 4b) am Träger (2) definierte Anbringungskraft verringert verglichen mit dem Anbringen des Dekors (3, 4, 4a, 4b) auf einem Träger (2), der die Trennschicht (13) nicht umfasst, wobei die Trennschicht (13) vorzugsweise aus Silikon oder Wachs besteht.

9. Verfahren nach einem der Ansprüche 1 bis 8, wobei
- der Träger (2) die Form eines flexiblen linearen Streifens hat,
- die Form (41) einen Formhohlraum (11) definiert; und
- der Träger (2) durch einen in der Form (41) vorgesehenen Weg entlang einer Bewegungsrichtung in den Formhohlraum (11) hinein und aus diesem heraus geführt wird.

10. Verfahren nach Anspruch 9, wobei der Weg durch einen Schlitz oder Tunnel (43) gebildet wird, der in der Form (41) vorgesehen ist, wobei
- der Schlitz oder Tunnel (43) mindestens an seinen Schnittpunkten mit dem Formhohlraum (11) eine krummlinige Form, insbesondere eine S-Form hat; und / oder
- der Teil des Trägers (2) innerhalb des Formhohlraums (11) länger ist als der Abstand zwischen den Schnittpunkten des Schlitzes oder Tunnels (43) mit dem Formhohlraum (11); sodass der Teil des Trägers (2) innerhalb des Formhohlraums (11) gekrümmt oder gebogen ist.

11. Verfahren nach einem der Ansprüche 1 bis 8, wobei
- die Form (41) einen Formhohlraum (11) mit einer Oberfläche (42) definiert, wobei die Formhohlraumoberfläche (42) eine Form aufweist, die der Außenform des Gegenstands entspricht (9), der geformt werden soll; und
- der Träger (2) einen Teil der Formhohlraumoberfläche (42) bildet.

12. Verfahren nach einem der Ansprüche 1 bis 11, wobei das Dekor (3, 4, 4a, 4b) an einem konkaven Teil der Außenfläche des Gegenstands (9) haftet.

## Revendications

1. Procédé de décoration dans un moule pour la fabrication d'un article décoré (10) comprenant les étapes :
- d'amenée d'un support (2) avec une décoration (3, 4, 4a, 4b) qui y est fixée dans un moule (41) ;
- de formation par moulage par extrusion-soufflage ou moulage par étirage-soufflage d'un article (9) dans le moule (41) de telle manière que l'article (9) ait contact et adhère à la décoration (3, 4, 4a, 4b) ;
- de détachement irréversible de la décoration (3, 4, 4a, 4b) qui adhère à l'article (9) du support (2) et
- d'enlèvement de l'article formé et décoré (10) du moule (41), en
- utilisant une température inférieure à 40°C de telle manière que la force de fixation définie par la fixation de la décoration (3, 4, 4a, 4b) au support (2) est supérieure à la force d'adhésion définie par l'adhésion de la décoration (3, 4, 4a, 4b) à l'article (9) après contact de la décoration (3, 4, 4a, 4b) avec l'article (9) et
- utilisant une température supérieure à 50°C de telle manière que la force de fixation définie par la fixation de la décoration (3, 4, 4a, 4b) au support (2) est inférieure à la force d'adhésion définie par l'adhésion de la décoration (3, 4, 4a, 4b) à l'article (9) après contact de la décoration (3, 4, 4a, 4b) avec l'article (9) si bien que l'article qui se forme (9) qui a une température supérieure à 50°C permet l'adhésion de la décoration (3, 4, 4a, 4b) à l'article (9),
**caractérisé en ce que**
la décoration (3, 4, 4a, 4b) est faite d'encre d'impression, la décoration (3, 4, 4a, 4b) dans une autre étape de procédé pouvant être retirée de l'article décoré (10) en mettant en contact l'article décoré (1) avec un fluide de lavage, le fluide de lavage ayant une température d'au moins 50°C et ne dépassant pas la température de dégradation de l'article (10).

2. Procédé selon la revendication 1, l'encre d'impression de la décoration (3, 4, 4a, 4b) étant faite d'une ou de plusieurs substances colorées, de préférence d'une ou de plusieurs couleurs d'impression, en particulier d'une ou de plusieurs sortes d'encre ou de peinture.

3. Procédé selon l'une des revendications 1 à 2, la décoration (3, 4, 4a, 4b) comprenant plusieurs éléments colorés espacés (4a) de la même couleur ou de différentes couleurs, par exemple des lettres, des caractères ou des nombres.

4. Procédé selon la revendication 3, la décoration (3, 4, 4a, 4b) comprenant une couche colorée (4b) qui relie et de préférence qui remplit les espaces (4c) entre les éléments colorés espacés (4a), la couche colorée (4b) étant de préférence plus près de l'article (9) que les éléments colorés espacés (4a) en formant ainsi une couleur d'arrière-plan comme partie de la décoration sur l'article décoré (10), la couche colorée étant faite d'encre d'impression.

5. Procédé selon l'une des revendications 1 à 4, la décoration (3, 4, 4a, 4b) adhérant directement à une surface extérieure de l'article (9) ou par l'intermédiaire d'un agent favorisant l'adhésion.

6. Procédé selon la revendication 5, la décoration (3, 4, 4a, 4b) ou l'agent favorisant l'adhésion pouvant être activé par la chaleur et/ou la pression, la chaleur et/ou la pression causant l'adhésion ou une adhésion accrue de celle-ci à l'article (9), cependant que de préférence ni la décoration (3, 4, 4a, 4b), ni, s'il y en a un, l'agent favorisant l'adhésion étant sur le côté faisant face à l'article (9) adhésif à 25°C tandis que la décoration (3, 4, 4a, 4b) est encore fixée au support (2).

7. Procédé selon l'une des revendications 1 à 6, la décoration (3, 4, 4a, 4b) pouvant être retirée de l'article décoré (10) en mettant en contact l'article décoré (1) avec un fluide de lavage, le fluide de lavage ayant une température d'au moins 60°C, de préférence d'au moins 70°C ou de manière particulièrement préférée d'au moins 80°C.

8. Procédé selon l'une des revendications 1 à 7, le support (2) comprenant une couche de séparation (13) qui est en contact avec la décoration (3, 4, 4a, 4b) pendant que la décoration (3, 4, 4a, 4b) est fixée au support (2), la couche de séparation (13) réduisant la force de fixation définie par la fixation de la décoration (3, 4, 4a, 4b) au support (2) par comparaison à la fixation de la décoration (3, 4, 4a, 4b) à un support (2) ne comprenant pas la couche de séparation (13), la couche de séparation (13) étant de préférence faite en silicone ou en cire.

9. Procédé selon l'une des revendications 1 à 8, cependant que
- le support (2) a la forme d'une bande linéaire flexible,
- le moule (41) définit une cavité de moule (11) et
- le support (2) est alimenté par un chemin prévu dans le moule (41) le long d'une direction de mouvement entrant et sortant de la cavité de moule (11).

10. Procédé selon la revendication 9, le chemin étant formé par une fente ou un tunnel (43) prévu dans le moule (41), cependant que
- la fente ou le tunnel (43) a une forme curvilinéaire au moins à ses points d'intersection avec la cavité de moule (11) et/ou
- la partie du support (2) avec la cavité de moule (11) est plus longue que la distance entre les points d'intersection de la fente ou du tunnel (43) avec la cavité de moule (11) si bien que la partie du support (2) à l'intérieur de la cavité du moule (11) est incurvée ou recourbée.

11. Procédé selon l'une des revendications 1 à 8, cependant que
- le moule (41) définit une cavité de moule (11) avec une surface (42), la surface de la cavité de moule (42) ayant une forme qui correspond à la forme extérieure de l'article (9) à former et
- le support (2) forme une partie de ladite surface de cavité de moule (42).

12. Procédé selon l'une des revendications 1 à 11, la décoration (3, 4, 4a, 4b) adhérant à une partie concave de la partie extérieure de l'article (9).
